# EUROPÄISCHE PATENTSCHRIFT

(11) **EP 2 795 832 B1**
(45) Veröffentlichungstag und Bekanntmachung des Hinweises auf die Patenterteilung: **20.03.2019**
(21) Anmeldenummer: 12813765.0
(22) Anmeldetag: 18.12.2012
(51) Int. Cl.: H04L 9/32

(54) **VERFAHREN ZUM KONTAKTLOSEN AUSLESEN EINES IDENTIFIKATIONSDOKUMENTS**
METHOD FOR READING AN IDENTIFICATION DOCUMENT IN A CONTACTLESS MANNER
PROCÉDÉ DE LECTURE SANS CONTACT D'UN DOCUMENT D'IDENTIFICATION

(30) Priorität: 20.12.2011 DE 102011121567
(43) Veröffentlichungstag der Anmeldung: 29.10.2014
(73) Patentinhaber: Giesecke+Devrient Mobile Security GmbH, 81677 München (DE)
(72) Erfinder: EICHHOLZ, Jan, 80997 München (DE); MEISTER, Gisela, 81737 München (DE); AICHBERGER, Thomas, 82041 Oberhaching (DE)
(86) Internationale Anmeldenummer: PCT/EP2012/005238
(87) Internationale Veröffentlichungsnummer: WO 2013/091840

(56) Entgegenhaltungen:
- WO-A2-2004/090800
- DE-A1- 10 037 176
- US-A1- 2005 076 216
- US-A1- 2007 178 882
- US-A1- 2011 275 316
- BRUCE CHRISTIANSON ET AL: "Multi-Channel Key Agreement Using Encrypted Public Key Exchange", 18. April 2007 (2007-04-18), SECURITY PROTOCOLS, SPRINGER BERLIN HEIDELBERG, BERLIN, HEIDELBERG, PAGE(S) 133 - 138, XP019159408, ISBN: 978-3-642-17772-9 das ganze Dokument

## Beschreibung

Die Erfindung betrifft ein Verfahren zum beschleunigten kontaktlosen Auslesen eines elektronischen Identifikationsdokuments mittels eines Terminals.

Ein elektronisches Identifikationsdokument im Sinn der Erfindung umfasst zumindest einen Mikroprozessorchip, in dem Identifikationsdaten der Person, welcher das Identifikationsdokument zugeordnet ist, in mit einem Datenschlüssel verschlüsselter Form abgespeichert sind, und einen Schlüsselspeicher, in dem der zur Verschlüsselung der Identifikationsdaten verwendete Schlüssel abgespeichert ist. Als elektronisches Identifikationsdokument kann insbesondere ein elektronischer Reisepass oder eine elektronische Identifikationskarte (z.B. elektronischer Personalausweis) vorgesehen sein.

Elektronische Identifikationsdokumente werden z.B. an Grenzkontrollen oder anderen Kontrollstationen, wie sie z.B. an Flughäfen vorgesehen sind, zur Personenkontrolle durch Terminals (Schreib-/Lesegeräte) massenhaft kontaktlos ausgelesen. Dabei werden die Identifikationsdaten aus dem Datenspeicher des Identifikationsdokuments kontaktlos an das Terminal übertragen, an irgend einer Stelle mit dem Schlüssel entschlüsselt, und im Terminal überprüft.

Empfohlene Mechanismen zur gesicherten Kommunikation zwischen maschinenlesbaren Reisedokumenten, wie z.B. elektronischen Reisepässen, und entsprechenden Terminals sind in der Technischen Richtlinie TR-03110, Version V 2.05, des Bundesamtes für Sicherheit in der Informationstechnik (BSI) beschrieben (BSI Technical Guideline TR-03110 Version 2.05) (im Folgenden BSI TR-03110). Insbesondere sind in BSI TR-03110 Mechanismen zur Authentisierung zwischen dem Terminal und einem Mikroprozessorchip des Reisedokuments beschrieben, sowie Mechanismen zur Vereinbarung und Ableitung gemeinsamer Sitzungsschlüssel zwischen dem Terminal und dem Mikroprozessorchip des maschinenlesbaren Reisedokuments. Insbesondere ist in BSI TR-03110 in Kapitel 4 angeführt: in Kap. 4.2 das PACE Protokoll (PACE = Password Authenticated Connection Establishment), das die gegenseitige Authentisierung und (optional EC, Elliptic Curve) Diffie-Hellman Schlüsselvereinbarung zur Vereinbarung von Sitzungsschlüsseln zwischen dem Mikroprozessorchip und dem Terminal beschreibt; in Kap. 4.3 die Chip Authentisierung, mit Authentisierung des Mikroprozessorchip gegenüber dem Terminal und Vereinbarung von Sitzungsschlüsseln, aus denen Datenschlüssel ableitbar sind. Dabei wird durch sowohl den Mikroprozessorchip als auch das Terminal jeweils ein erster Sitzungsschlüssel KMAC erzeugt, der zur Authentisierung zwischen Chip und Terminal verwendet wird, und ein zweiter Sitzungsschlüssel KENC erzeugt, aus dem anschließend ein Transportschlüssel KSE abgeleitet wird, mit dem zwischen Chip und Terminal zu übertragende Daten verschlüsselt werden.

DE 10 2005 038 092 A1 offenbart ein Verfahren zur maschinellen Prüfung von in einem Passbuch elektronisch gespeicherten Daten.

DE 100 37176 C2 offenbart als elektronisches Identifikationsdokument eine Ausweiskarte mit einem optischen Speicher und einem integrierten Schaltkreis, wobei im optischen Speicher personalisierte Daten verschlüsselt abgespeichert sind, verschlüsselt mit einem kryptographischen Schlüssel, der in dem integrierten Schaltkreis der Ausweiskarte abgespeichert ist. Die Ausweiskarte soll durch ein externes Schreib-/Lesegerät (Terminal) ausgelesen werden. Der integrierte Schaltkreis führt hierzu eine Authentifikationsprüfung an dem Schreib-/Lesegerät durch und gibt nach positiver Authentifikationsprüfung den Schlüssel zur Übermittlung an das Schreib-/Lesegerät frei. Die im optischen Speicher verschlüsselt abgespeicherten personalisierten Daten werden an das Schreib-/Lesegerät zur Entschlüsselung mit dem Schlüssel übermittelt.

Eine Personenkontrolle an Hand von elektronischen Identifikationsdokumenten mit dem in DE 100 37176 C2 beschriebenen Verfahren ist zeitaufwändig, da zunächst eine Authentisierung des Terminals durchgeführt werden muss, dann der Schlüssel ausgelesen werden muss, und schließlich die Identifikationsdaten ausgelesen und entschlüsselt werden müssen.

Das Auslesen von integrierten Schaltkreisen in elektronischen Identifikationsdokumenten erfolgt üblicherweise kontaktlos mit RFID-Technik (RFID: radio-frequency identification) im kurzreichweitigen Funkbereich, genauer im proximity coupling Bereich, der Reichweiten von bis zu maximal ca. 15 Zentimeter umfasst, bei einer Übertragungsfrequenz von meistens 13,56 MHz, entsprechend Reichweiten von ca. 7 bis ca. 15 Zentimetern. Die Kommunikation für Identifikationskarten im kurzreichweitigen proximity coupling Funkbereich ist in ISO/IEC 14443 standardisiert. Die kurze Reichweite gewährt Schutz vor Ausspähen der Daten, während sie gerade funkübertragen werden.

Speziell im Bereich der Logistik und Lagerhaltung mittels RFID-Etiketten wird Kontaktlos-Kommunikation im langreichweitigen Funkbereich verwendet, mit Betriebsfrequenzen im Bereich von einigen Gigahertz und Reichweiten von einigen Metern, typischerweise 3-6 Metern. Zur Kommunikation zwischen elektronischen Geräten werden langreichweitige Funkverbindungen im UHF-Bereich verwendet, mit Betriebsfrequenzen im Bereich einiger weniger GHz, und Reichweiten im Bereich von einigen zehn Metern bis einigen hundert Metern, z.B. WLAN (Wireless Local Area Network), mit z.B. 2,4 GHz oder 5 GHz Betriebsfrequenz, oder IrDA (Infrared Data Association). Die langen Reichweiten erleichtern ein Abfangen von übertragenen Daten während der Funkübertragung, weshalb langreichweitige Funkverbindungen für die Übertragung sicherheitskritischer Daten nachteilig sind.

Der Fachartikel Bruce Christianson et al, "Multi-Channel Key Agreement Using Encrypted Public Key Exchange", Security Protocols 2007, Springer Berlin, Heidelberg, pp. 133-138, offenbart ein aufgeteiltes Schlüselableitungs-Protokoll, z.B. Diffie-Hellman-Schlüsselableitungs-Protokoll, bei dem Teilschlüssel über zwei Kanäle, nämlich einen langreichweitigen (z.B. RF) und einen kurzreichweitigen (z.B. kontaktbehaftet) übertragen werden.

Der Erfindung liegt die Aufgabe zu Grunde, ein Verfahren zum beschleunigten kontaktlosen Auslesen eines elektronischen Identifikationsdokuments mittels eines Terminals zu schaffen, das schnell und zugleich sicher ist.

Die Aufgabe wird gelöst durch ein Verfahren nach Anspruch 1. Vorteilhafte Ausgestaltungen der Erfindung sind in den abhängigen Ansprüchen angegeben.

Bei dem Verfahren nach Anspruch 1 werden zunächst, im Datenleseschritt, die verschlüsselten Identifikationsdaten, die eine vergleichsweise große Datenmenge bilden, über eine langreichweitige Funkverbindung übertragen. Dies kann beispielsweise geschehen, während der Inhaber des Identifikationsdokuments in einer Warteschlange an einer Kontrollstelle steht, an der das Identifikationsdokument kontrolliert werden soll. Hierdurch kann die große Datenmenge der Identifikationsdaten während einer herkömmlicherweise ungenutzten Zeitspanne, z.B. während des Wartens in der Warteschlange, ausgelesen werden. Die besonders sicherheitskritische Übertragung des Datenschlüssels, mit dem die verschlüsselten Identifikationsdaten entschlüsselt werden können, an das Terminal, erfolgt anschließend über eine kurzreichweitige Funkverbindung. Durch die geringe Reichweite der kurzreichweitigen Funkverbindung ist ein guter Schutz gegen missbräuchliches Ausspähen des Datenschlüssels, während er in der Luft ist, d.h. gerade funkübertragen ist, gewährleistet. In der Regel kann die Datenschlüssel-Übertragung erst erfolgen, nachdem der Inhaber das Identifikationsdokument bewusst an der Kontrollstelle vorgelegt hat.

Daher ist gemäß Anspruch 1 ein Verfahren zum beschleunigten kontaktlosen Auslesen eines elektronischen Identifikationsdokuments mittels eines Terminals geschaffen, das schnell und zugleich sicher ist.

Der Schlüsselspeicher ist für einen Mikroprozessor (Chip) des Identifikationsdokuments zugänglich. Der Datenschlüssel ist beispielsweise ein symmetrischer Schlüssel, mit dem die Identifikationsdaten verschlüsselt worden sind.

Als langreichweitige Funkverbindung ist wahlweise eine Funkverbindung mit einer Reichweite aus dem Bereich von ungefähr 1 Meter bis ungefähr einigen hundert Metern vorgesehen und/oder mit einer Betriebsfrequenz aus dem Bereich von ungefähr 0,3 GHz bis ungefähr 10 GHz, vorzugsweise ungefähr 2 GHz bis ungefähr 6 GHz, z.B. 2,4 GHz oder 5 GHz, z.B. UHF-RFID oder WLAN oder IrDA.

Als kurzreichweitige Funkverbindung ist wahlweise eine Funkverbindung mit einer Reichweite aus dem Bereich von ungefähr 1 Zentimeter bis ungefähr 15 Zentimetern vorgesehen und/oder mit einer Betriebsfrequenz aus dem Bereich von ungefähr 3 MHz bis ungefähr 20 GHz, vorzugsweise bei 13,56 GHz, z.B. gemäß ISO/IEC 14443.

Wahlweise werden im Datenleseschritt die Identifikationsdaten einfach ausgelesen, ohne vorherige Authentisierung, und ohne vorherige Verschlüsselung der Identifikationsdaten. Da die Identifikationsdaten in verschlüsselter Form im Datenspeicher abgespeichert sind, kann ein Unberechtigter, der die Identifikationsdaten ausliest, sie nicht entschlüsseln. Das derartige einfache Auslesen bietet somit dennoch eine beschränkte Sicherheit.

Optional ist gewünscht, dass ein Unbefugter auch die verschlüsselten Identifikationsdaten nicht auslesen kann oder sogar keinerlei Zugriffsmöglichkeit auf den Datenspeicher hat. Deshalb ist wahlweise für den Zugriff auf den Datenspeicher eine Authentisierung erforderlich, wie nachfolgend beschrieben ist. Der Datenspeicher muss hierfür Verbindung zu einem Mikroprozessor haben, wohingegen beim einfachen Auslesen ein Datenspeicher ohne Mikroprozessor-Anbindung ausreichend ist.

Wahlweise ist der Datenspeicher für den Mikroprozessor zugänglich, z.B. falls Datenspeicher, Schlüsselspeicher und Mikroprozessor direkt im Identifikationsdokument integriert sind, insbesondere auf einem einzigen Chip integriert sind. Alternativ hat das Identifikationsdokument einen weiteren Mikroprozessor, und der Datenspeicher ist für diesen zugänglich. Beispielsweise sind der Datenspeicher und der weitere Mikroprozessor in einem gesonderten Etikett oder Tag angeordnet, das an dem Identifikationsdokument angebracht ist, z.B. aufgeklebt ist.

Bei Ausführungsformen, wo der Datenspeicher für den Mikroprozessor, z.B. im Hauptdokument, oder den weiteren Mikroprozessor, z.B. in einem Tag oder Etikett, zugänglich ist, wird wahlweise im Datenleseschritt, bevor die Identifikationsdaten an das Terminal übermittelt werden, ein erster Authentisierungsvorgang durchgeführt, bei dem mindestens eine Authentisierung zwischen dem Mikroprozessor und dem Terminal oder dem weiteren Mikroprozessor und dem Terminal durchgeführt wird. Wahlweise wird weiter ein Transportschlüssel zur Verschlüsselung der zu übermittelnden Identifikationsdaten berechnet, und werden die Identifikationsdaten mit dem Transportschlüssel verschlüsselt. Auf die Verschlüsselung der Identifikationsdaten mit einem Transportschlüssel kann optional verzichtet werden, da sie ohnehin verschlüsselt im Datenspeicher abgespeichert sind.

Wahlweise wird im Schlüsselleseschritt, bevor der Datenschlüssel an das Terminal übermittelt wird, ein - der Unterscheidbarkeit halber "zweiter" genannter - Authentisierungsvorgang durchgeführt, bei dem mindestens eine Authentisierung zwischen dem Mikroprozessorchip und dem Terminal durchgeführt wird. Vorzugsweise wird zudem ein Schlüssel-Transportschlüssel zur Verschlüsselung des zu übermittelnden Datenschlüssels berechnet, und der Datenschlüssel mit dem Schlüssel-Transportschlüssel verschlüsselt, bevor er an das Terminal übertragen wird. Wahlweise ist der Datenschlüssel unverschlüsselt im Schlüsselspeicher abgespeichert und sollte somit vor der Übermittlung an das Terminal verschlüsselt werden. Falls der Datenschlüssel in verschlüsselter Form im Schlüsselspeicher abgespeichert ist, kann wahlweise die zusätzliche Verschlüsselung mit dem Schlüssel-Transportschlüssel entfallen. Dann muss allerdings der Schlüssel zum Entschlüsseln des Datenschlüssels an das Terminal bekanntgegeben werden.

Der "zweite" Authentisierungsvorgang kann wahlweise der einzige Authentisierungsvorgang sein, in dem Fall, wenn der vorhergehende Datenleseschritt ohne Authentisierung gegenüber dem Datenspeicher bzw. dem zugeordneten Mikroprozessor erfolgt.

Alternativ wird nur im Datenleseschritt eine Authentisierung durchgeführt, insbesondere Authentisierung des Terminals gegenüber dem Datenspeicher bzw. genau gesagt Authentisierung des Terminals gegenüber dem dem Datenspeicher zugeordneten Mikroprozessor, und im Schlüsselleseschritt keine Authentisierung durchgeführt. Diese Lösung ist denkbar, da der Schlüsselleseschritt über die kurzreichweitige Funkverbindung durchgeführt wird und somit nicht so leicht abgehorcht werden kann. Wahlweise wird hierbei im Datenleseschritt ein Transportschlüssel berechnet, der wahlweise nur zur Verschlüsselung der Identifikationsdaten für den Datenleseschritt, wahlweise nur zur Verschlüsselung des Datenschlüssels für den Schlüsselleseschritt, wahlweise sowohl zur Verschlüsselung der Identifikationsdaten als auch zur Verschlüsselung des Datenschlüssels verwendet wird, jeweils vor Übermittlung der jeweiligen Daten an das Terminal.

Alternativ werden insgesamt zwei Authentisierungsvorgänge durchgeführt, je einer im Datenleseschritt und einer im Schlüsselleseschritt. Wahlweise wird in jedem Authentisierungsvorgang ein eigener Transportschlüssel erzeugt, jeweils wie weiter oben beschrieben. Wahlweise wird ein im ersten Authentisierungsvorgang, beim Datenleseschritt erzeugter Transportschlüssel auch oder nur zur Verschlüsselung des Datenschlüssels im Schlüsselleseschritt verwendet.

Wahlweise werden während des ersten und/oder zweiten Authentisierungsvorgangs ein oder mehrere Sitzungsschlüssel zwischen dem Mikroprozessor bzw. weiteren Mikroprozessor und dem Terminal vereinbart, und aus zumindest einem Sitzungsschlüssel der Transportschlüssel bzw. Schlüssel-Transportschlüssel abgeleitet.

Wahlweise wird im - ggf. jeweiligen - Authentisierungsvorgang eine gegenseitige oder einseitige Authentisierung und Diffie-Hellman Schlüsselvereinbarung zwischen dem Mikroprozessor bzw. weiteren Mikroprozessor und dem Terminal durchgeführt, insbesondere gemäß PACE Protokoll Kap. 4.2 oder gemäß Chip Authentisierung Kap. 4.3 oder gemäß Terminal Authentisierung Kap. 4.4 der BSI TR-03110.

Ein erfindungsgemäßes Identifikationsdokument hat einen Mikroprozessor, einen Datenspeicher, in dem Identifikationsdaten in mit einem Datenschlüssel verschlüsselter oder zumindest entschlüsselbarer Form abgespeichert oder abspeicherbar sind, und einen für den Mikroprozessor zugänglichen Schlüsselspeicher, in dem der Datenschlüssel abgespeichert oder abspeicherbar ist, und ist gekennzeichnet durch eine langreichweitige Schnittstelle, über die eine langreichweitige Funkverbindung zwischen dem Datenspeicher und einem Terminal herstellbar ist, und eine kurzreichweitige Schnittstelle, über die eine kurzreichweitige Funkverbindung zwischen dem Schlüsselspeicher und einem Terminal herstellbar ist, und dadurch, dass der Datenschlüssel oder der Schlüsselspeicher derart gesichert ist, dass eine Übertragung des Datenschlüssels oder sonstiger Daten aus dem Schlüsselspeicher an ein Terminal über die kurzreichweitige Funkverbindung möglich ist und über die langreichweitige Funkverbindung nicht möglich ist. Hierdurch wird ein unbemerktes Ausspähen des Datenschlüssels aus der Luftschnittstelle, also während der Datenschlüssel gerade funkübertragen wird, verhindert oder zumindest stark erschwert.

Der Datenspeicher ist wahlweise in das Identifikationsdokument fest integriert. Wahlweise sind der Datenspeicher, der Schlüsselspeicher und der Mikroprozessor auf einem einzigen Chip integriert, der mit der langreichweitigen Schnittstelle und der kurzreichweitigen Schnittstelle gekoppelt oder koppelbar ist. Wahlweise ist der Datenspeicher für den Mikroprozessor, der auch dem Schlüsselspeicher zugeordnet ist, zugänglich.

Wahlweise sind der Datenspeicher und die langreichweitige Schnittstelle in einem gesonderten, an einem Hauptkörper des Identifikationsdokuments angebrachten Etikett angeordnet. Das Etikett oder Tag kann ein reines Speicher-RFID-Etikett ohne Mikroprozessor sein. Alternativ weist das Etikett einen weiteren Mikroprozessor auf, wobei optional der Datenspeicher für den weiteren Mikroprozessor zugänglich ist. Das Etikett ist z.B. auf dem Hauptkörper aufgeklebt.

Bei der Variante des Identifikationsdokuments mit einem separaten Etikett für den Datenspeicher und dem Schlüsselspeicher im Hauptdokument sind der Datenspeicher und die langreichweitige Schnittstelle baulich vom Hauptdokument des Identifikationsdokuments getrennt. Somit ist der im Hauptdokument angeordnete Schlüsselspeicher baulich gegenüber der langreichweitigen Schnittstelle zugriffsgeschützt. Im Fall, dass Datenspeicher, Schlüsselspeicher und Mikroprozessor im Hauptdokument, wahlweise auf demselben Chip, vorgesehen sind, wird Zugriffsschutz auf den Schlüsselspeicher gegenüber der langreichweitigen Schnittstelle beispielsweise auf Softwareebene oder Protokollebene erreicht, durch geeignete Software oder geeignete Protokolle zum Zugreifen auf den Schlüsselspeicher und Datenspeicher.

Ein erfindungsgemäßes Terminal zum kontaktlosen Auslesen eines elektronischen Identifikationsdokuments zeichnet sich aus durch: eine langreichweitige Terminal-Schnittstelle, über die, über die langreichweitige Schnittstelle des Identifikationsdokuments, eine langreichweitige Funkverbindung zu dem Datenspeicher des Identifikationsdokuments herstellbar ist; und eine kurzreichweitige Terminal-Schnittstelle, über die, über die kurzreichweitige Schnittstelle des Identifikationsdokuments, eine kurzreichweitige Funkverbindung zu dem Schlüsselspeicher des Identifikationsdokuments herstellbar ist. Die kurzreichweitige Terminal-Schnittstelle hat exklusiven Zugriff auf den Schlüsselspeicher des Identifikationsdokuments, d.h. die langreichweitige Terminal-Schnittstelle kann nicht auf den Schlüsselspeicher zugreifen.

Im Folgenden wird die Erfindung an Hand von Ausführungsbeispielen und unter Bezugnahme auf die Zeichnung näher erläutert, in der zeigen:
- Fig. 1: ein Identifikationsdokument gemäß einer Ausführungsform der Erfindung, in schematischer Darstellung;
- Fig. 2: einen Datenleseschritt gemäß einer Ausführungsform eines erfindungsgemäßen Verfahrens;
- Fig. 3: einen Schlüsselleseschritt gemäß einer Ausführungsform eines erfindungsgemäßen Verfahrens;
- Fig. 4: einen elektronischen Reisepass, gemäß einer Ausführungsform der Erfindung.

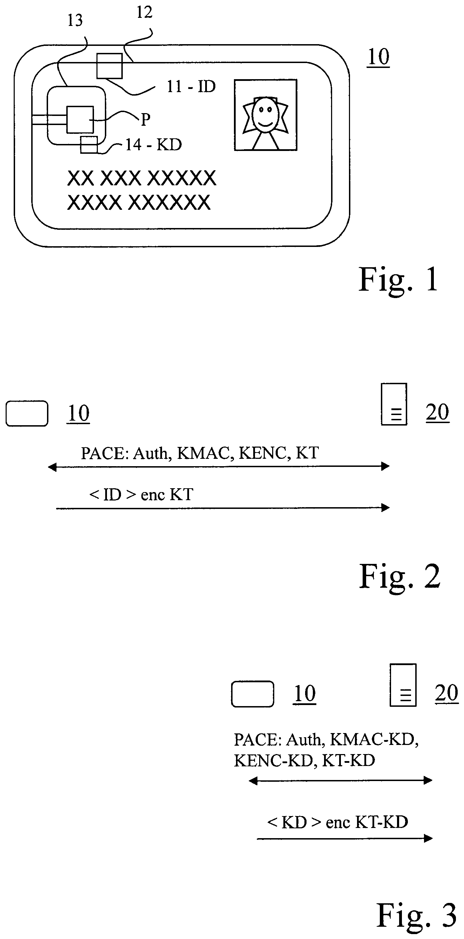

Fig. 1 zeigt ein Identifikationsdokument 10 (z.B. Personalausweis) gemäß einer Ausführungsform der Erfindung, in schematischer Darstellung. Das Identifikationsdokument 10 hat einen Mikroprozessor P, einen daran angebundenen Schlüsselspeicher 14 und einen ebenfalls angebundenen Datenspeicher 11. Im Datenspeicher 11 sind Identifikationsdaten ID in verschlüsselter Form abgespeichert. Die Identifikationsdaten ID sind mit einem symmetrischen Datenschlüssel KD verschlüsselt. Der Datenschlüssel KD ist in dem speziell gesicherten Schlüsselspeicher 14 unverschlüsselt abgespeichert. Das Identifikationsdokument 10 hat weiter eine langreichweitige Schnittstelle 12, über die eine langreichweitige Funkverbindung zu einem Terminal 20 herstellbar ist, und eine kurzreichweitige Schnittstelle 13, über die eine kurzreichweitige Funkverbindung zu einem Terminal 20 herstellbar ist. Der Datenschlüssel KD ist derart gesichert, dass eine Übertragung des Datenschlüssels KD an das Terminal 20 über die kurzreichweitige Funkverbindung 13 möglich ist und über die langreichweitige Funkverbindung 12 nicht möglich ist. Über die kurzreichweitige Schnittstelle 13 ist also ein auslesender Zugriff auf den Schlüsselspeicher 14 möglich, über die langreichweitige Schnittstelle 12 hingegen nicht. An die langreichweitige Schnittstelle 12 ist dagegen der Datenspeicher 11 angebunden, in dem die verschlüsselten Identifikationsdaten ID abgespeichert sind. Im Beispiel aus Fig. 1 sind der Datenspeicher 11, der Schlüsselspeicher 14, die langreichweitige Schnittstelle 12 und die kurzreichweitige Schnittstelle 13 an denselben und einzigen Mikroprozessor P des Identifikationsdokuments 10 angekoppelt. Die Zugriffssicherung auf den Schlüsselspeicher 14 gegenüber der langreichweitigen Funkschnittstelle 13 ist chipintern gelöst, z.B. auf Protokollebene oder Softwareebene.

Fig. 2 zeigt einen Datenleseschritt gemäß einer Ausführungsform eines erfindungsgemäßen Verfahrens. Der Datenleseschritt umfasst einen über die langreichweitige Schnittstelle 12 durchgeführten Authentisierungsvorgang, in dem eine gegenseitige Authentisierung und Diffie-Hellman Schlüsselvereinbarung zwischen dem Mikroprozessor P in Bezug auf den Datenspeicher 11 und dem Terminal 20 durchgeführt wird, gemäß dem PACE Protokoll Kap. 4.2 der BSI TR-03110. Dabei werden zwei Sitzungsschlüssel KMAC, KENC berechnet. Anhand des Authentisierungs-Sitzungsschlüssels KMAC authentisieren sich der Mikroprozessor P und das Terminal 20 gegenseitig. Aus dem zweiten Sitzungsschlüssel KENC wird ein Transportschlüssel KT abgeleitet, mit dem im Mikroprozessor P die Identifikationsdaten ID aus dem Datenspeicher 11 verschlüsselt werden. Anlässlich einer erfolgreichen Terminal-Authentisierung wird das Terminal 20 als berechtigt angesehen. Optional kann die Verschlüsselung der Identifikationsdaten ID mit dem Transportschlüssel KT an dieser Stelle entfallen, da die Identifikationsdaten ID ohnehin mit dem Datenschlüssel KD verschlüsselt sind. Die ggf. mit KT verschlüsselten Identifikationsdaten ID werden vom Mikroprozessor 11 über die langreichweitige Schnittstelle 12 an das Terminal 20 übertragen und ggf. mit KT beim Terminal 20 entschlüsselt. Die entschlüsselten Identifikationsdaten ID sind immer noch mit dem Datenschlüssel KD verschlüsselt.

Fig. 3 zeigt einen Schlüsselleseschritt gemäß einer Ausführungsform eines erfindungsgemäßen Verfahrens. Der Schlüsselleseschritt umfasst einen über die kurzreichweitige Schnittstelle 13 durchgeführten Authentisierungsvorgang, in dem eine gegenseitige Authentisierung und Diffie-Hellman Schlüsselvereinbarung zwischen dem Mikroprozessor P und dem Terminal 20 durchgeführt wird, gemäß dem PACE Protokoll Kap. 4.2 der BSI TR-03110. Dabei werden zwei Sitzungsschlüssel KMAC-KD, KENC-KD berechnet. Anhand des Authentisierungs-Sitzungsschlüssels KMAC-KD authentisieren sich das Terminal 20 und der Mikroprozessor P in Bezug auf den Schlüsselspeicher 14 gegenseitig. Aus dem zweiten Sitzungsschlüssel KENC-KD wird ein zweiter Transportschlüssel KT-KD abgeleiten, mit dem durch den Mikroprozessor P oder unter Steuerung des Mikroprozessors P der Datenschlüssel KD aus dem Schlüsselspeicher 14 verschlüsselt wird. Der mit dem Transportschlüssel KT-KD verschlüsselte Datenschlüssel KD wird vom Mikroprozessor P über die kurzreichweitige Schnittstelle 12 an das Terminal 20 übertragen und beim Terminal 20 entschlüsselt.

Nun entschlüsselt das Terminal mit dem entschlüsselten Datenschlüssel KD die verschlüsselten Identifikationsdaten ID.

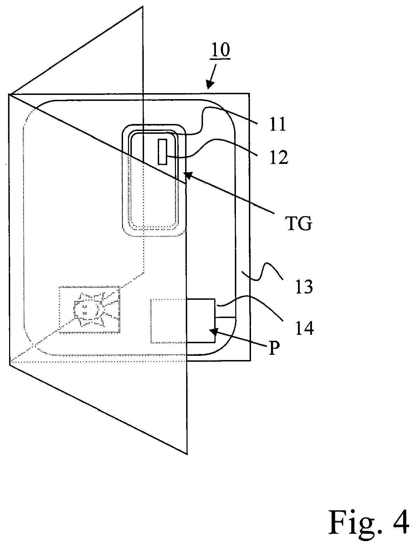

Fig. 4 zeigt, in schematischer Darstellung, einen elektronischen Reisepass, mit einer Datenseite 10 als Identifikationsdokument 10, gemäß einer Ausführungsform der Erfindung. Die Datenseite 10 hat einen Mikroprozessorchip P mit einem integrierten Schlüsselspeicher 14 und eine kurzreichweitige Kontaktlos-Schnittstelle (Funkschnittstelle) 13, über die nach erfolgreicher Authentisierung der im Schlüsselspeicher 14 abgespeicherte Datenschlüssel KD auslesbar ist. Auf eine Oberfläche der Datenseite 10 ist ein UHF-RFID-Etikett TG aufgeklebt, mit einer langreichweitigen Kontaktlos-Schnittstelle (Antenne) 13 und einem mit der langreichweitigen Kontaktlos-Schnittstelle (Antenne) 13 gekoppelten Datenspeicher 11, in dem verschlüsselte Identifikationsdaten ID abgespeichert sind, verschlüsselt mit dem im Schlüsselspeicher 14 abgespeicherten symmetrischen Datenschlüssel KD. Das UHF-RFID-Etikett TG hat im Beispiel aus Fig. 4 keinen Mikroprozessor und ist somit ein reines Speicheretikett. Alternativ kann das UHF-RFID-Etikett TG zusätzlich einen eigenen Mikroprozessor P-2 haben.

## Patentansprüche

1. Verfahren zum kontaktlosen Auslesen eines elektronischen Identifikationsdokuments (10) mittels eines Terminals (20),
wobei das Identifikationsdokument (10) umfasst:
- einen Mikroprozessor (P),
- einen Datenspeicher (11), in dem Identifikationsdaten (ID) in verschlüsselter, mit einem Datenschlüssel (KD) entschlüsselbarer Form abgespeichert sind,
- und einen für den Mikroprozessor (P) zugänglichen Schlüsselspeicher (14), in dem der Datenschlüssel (KD) abgespeichert ist,
wobei bei dem Verfahren
- in einem Datenleseschritt die verschlüsselten Identifikationsdaten (ID) aus dem Datenspeicher (11) an das Terminal (20) übermittelt werden,
- in einem Schlüsselleseschritt der Datenschlüssel (KD) aus dem Schlüsselspeicher (14) an das Terminal (20) übermittelt wird und
- in einem Entschlüsselungsschritt im Terminal (20) die Identifikationsdaten (ID) mit dem Datenschlüssel (KD) entschlüsselt werden,
**dadurch gekennzeichnet, dass**
der Datenleseschritt unter Verwendung einer langreichweitigen Funkverbindung durchgeführt wird und der Schlüsselleseschritt unter Verwendung einer kurzreichweitigen Funkverbindung durchgeführt wird.

2. Verfahren nach Anspruch 1, wobei als langreichweitige Funkverbindung eine Funkverbindung mit einer Reichweite aus dem Bereich von 1 Meter bis einigen hundert Metern vorgesehen ist und/oder mit einer Betriebsfrequenz aus dem Bereich von 0,3 GHz bis 10 GHz.

3. Verfahren nach Anspruch 1 oder 2, wobei als kurzreichweitige Funkverbindung eine Funkverbindung mit einer Reichweite aus dem Bereich von 1 Zentimeter bis 15 Zentimetern vorgesehen ist und/oder mit einer Betriebsfrequenz aus dem Bereich von 3 MHz bis 20 GHz, vorzugsweise bei 13,56 GHz.

4. Verfahren nach einem der Ansprüche 1 bis 3, wobei
- der Datenspeicher (11) für den Mikroprozessor (P) oder einen weiteren Mikroprozessor (P-2) zugänglich ist, und
- im Datenleseschritt, bevor die Identifikationsdaten (ID) an das Terminal (20) übermittelt werden, ein erster Authentisierungsvorgang durchgeführt wird, bei dem mindestens eine Authentisierung zwischen dem Mikroprozessor (P) und dem Terminal (T) oder dem weiteren Mikroprozessor (P-2) und dem Terminal (T) durchgeführt wird, und wahlweise weiter ein Transportschlüssel (KT) zur Verschlüsselung der zu übermittelnden Identifikationsdaten (ID) berechnet wird, und die Identifikationsdaten (ID) mit dem Transportschlüssel (KT) verschlüsselt werden.

5. Verfahren nach einem der Ansprüche 1 bis 4, wobei im Schlüsselleseschritt, bevor der Datenschlüssel (KD) an das Terminal (20) übermittelt wird, ein zweiter Authentisierungsvorgang durchgeführt wird, bei dem mindestens eine Authentisierung zwischen dem Mikroprozessorchip (P) und dem Terminal (20) durchgeführt wird, und wahlweise weiter ein Schlüssel-Transportschlüssel (KT-KD) zur Verschlüsselung des zu übermittelnden Datenschlüssels (KD) berechnet wird, und der Datenschlüssel (KD) mit dem Schlüssel-Transportschlüssel (KT-KD) verschlüsselt wird.

6. Verfahren nach Anspruch 4 oder 5, wobei während des ersten und/oder zweiten Authentisierungsvorgangs ein oder mehrere Sitzungsschlüssel (KMAC, KENC) zwischen dem Mikroprozessor (P) bzw. weiteren Mikroprozessor (P-2) und dem Terminal (20) vereinbart werden, und aus zumindest einem Sitzungsschlüssel (KENC) der Transportschlüssel (KT) bzw. Schlüssel-Transportschlüssel (KT-KD) abgeleitet wird.

7. Verfahren nach Anspruch 6, wobei im Authentisierungsvorgang eine gegenseitige oder einseitige Authentisierung und Diffie-Hellman Schlüsselvereinbarung zwischen dem Mikroprozessorchip (P) bzw. weiteren Mikroprozessor (P-2) und dem Terminal (20) durchgeführt wird, insbesondere gemäß PACE Protokoll Kap. 4.2 oder gemäß Chip Authentisierung Kap. 4.3 oder gemäß Terminal Authentisierung Kap. 4.4 der BSI TR-03110.

8. Identifikationsdokument (10) mit
- einem Mikroprozessor (P),
- einem Datenspeicher (11), in dem Identifikationsdaten (ID) in verschlüsselter, mit einem Datenschlüssel (KD) entschlüsselbarer Form abgespeichert oder abspeicherbar sind,
- und einem für den Mikroprozessor (P) zugänglichen Schlüsselspeicher (14), in dem der Datenschlüssel (KD) abgespeichert oder abspeicherbar ist,
**gekennzeichnet durch**
- eine langreichweitige Schnittstelle (12), über die eine langreichweitige Funkverbindung zwischen dem Datenspeicher (11) und einem Terminal (20) herstellbar ist, und
- eine kurzreichweitige Schnittstelle (13), über die eine kurzreichweitige Funkverbindung zwischen dem Schlüsselspeicher (14) einem Terminal (20) herstellbar ist,
**und dadurch, dass**
der Datenschlüssel (KD) oder Schlüsselspeicher (14) derart gesichert ist, dass eine Übertragung des Datenschlüssels (KD) aus dem Schlüsselspeicher (14) an ein Terminal über die kurzreichweitige Funkverbindung (13) möglich ist und über die langreichweitige Funkverbindung (12) nicht möglich ist.

9. Identifikationsdokument (10) nach Anspruch 8, wobei der Datenspeicher fest in das Identifikationsdokument integriert ist, wobei der Datenspeicher (11), der Schlüsselspeicher (14) und der Mikroprozessor (P) auf einem einzigen Chip integriert sind.

10. Identifikationsdokument (10) nach Anspruch 8, wobei der Datenspeicher (11) und die langreichweitige Schnittstelle (12) in einem gesonderten, an einem Hauptkörper des Identifikationsdokuments (10) angebrachten Etikett angeordnet sind, wobei das Etikett einen weiteren Mikroprozessor (P-2) aufweist, wobei der Datenspeicher (11) für den weiteren Mikroprozessor (P-2) zugänglich ist.

11. Terminal (20) zum kontaktlosen Auslesen eines elektronischen Identifikationsdokuments (10) nach einem der Ansprüche 8 bis 10,
**gekennzeichnet durch**
- eine langreichweitige Terminal-Schnittstelle, über die, über die langreichweitige Schnittstelle (12) des Identifikationsdokuments (10), eine langreichweitige Funkverbindung zu dem Datenspeicher (11) des Identifikationsdokuments (10) herstellbar ist, und
- eine kurzreichweitige Terminal-Schnittstelle, über die, über die kurzreichweitige Schnittstelle (13) des Identifikationsdokuments (10), eine kurzreichweitige Funkverbindung zu dem Schlüsselspeicher (14) des Identifikationsdokuments (10) herstellbar ist.

## Claims

1. A method for the contactless readout of an electronic identification document (10) by means of a terminal (20),
wherein the identification document (10) comprises:
- a microprocessor (P),
- a data memory (11) in which identification data (ID) are stored in encrypted form decryptable with a data key (KD),
- and a key memory (14) which is accessible to the microprocessor (P) and in which the data key (KD) is stored,
wherein in the method
- in a data reading step the encrypted identification data (ID) are transferred from the data memory (11) to the terminal (20),
- in a key reading step the data key (KD) is transferred from the key memory (14) to the terminal (20) and
- in a decryption step in the terminal (20) the identification data (ID) are decrypted with the data key (KD),
**characterized in that**
the data reading step is carried out employing a long-range radio connection, and the key reading step is carried out employing a short-range radio connection.

2. The method according to claim 1, wherein as long-range radio connection a radio connection is provided with a range from the area of 1 meter to several hundred meters and/or with an operating frequency from the area of 0.3 GHz to 10 GHz.

3. The method according to claim 1 or 2, wherein as short-range radio connection a radio connection is provided with a range from the area of 1 centimeter to 15 centimeters and/or with an operating frequency from the area of 3 MHz to 20 GHz, preferably at 13.56 GHz.

4. The method according to any of claims 1 to 3, wherein
- the data memory (11) is accessible to the microprocessor (P) or a further microprocessor (P-2), and
- in the data reading step, before the identification data (ID) are transferred to the terminal (20), a first authentication process is carried out, in which at least one authentication is carried out between the microprocessor (P) and the terminal (T) or the further microprocessor (P-2) and the terminal (T), and optionally further a transport key (KT) is computed for encrypting the identification data (ID) to be transferred, and the identification data (ID) are encrypted with the transport key (KT).

5. The method according to any of claims 1 to 4, wherein in the key reading step, before the data key (KD) is transferred to the terminal (20), a second authentication process is carried out, in which at least one authentication is carried out between the microprocessor chip (P) and the terminal (20), and optionally further a key-transport key (KT-KD) is computed for encrypting the data key (KD) to be transferred, and the data key (KD) is encrypted with the key-transport key (KT-KD).

6. The method according to claim 4 or 5, wherein during the first and/or second authentication process one or several session keys (KMAC, KENC) are agreed between the microprocessor (P) and/or further microprocessor (P-2) and the terminal (20), and from at least one session key (KENC) the transport key (KT) and/or key-transport key (KT-KD) is derived.

7. The method according to claim 6, wherein in the authentication process a mutual or unilateral authentication and Diffie-Hellman key agreement is carried out between the microprocessor chip (P) and/or further microprocessor (P-2) and the terminal (20), in particular in accordance with the PACE protocol, chapter 4.2, or in accordance with chip authentication, chapter 4.3, or in accordance with terminal authentication, chapter 4.4, of the BSI TR-03110.

8. An identification document (10) having
- a microprocessor (P),
- a data memory (11) in which identification data (ID) are stored or storable in encrypted form decryptable with a data key (KD),
- and a key memory (14) which is accessible to the microprocessor (P) and in which the data key (KD) is stored or storable,
**characterized by**
- a long-range interface (12), via which a long-range radio connection can be established between the data memory (11) and a terminal (20), and
- a short-range interface (13), via which a short-range radio connection can be established between the key memory (14) and a terminal (20),
**and in that**
the data key (KD) or key memory (14) is secured such that a transmission of the data key (KD) from the key memory (14) to a terminal is possible via the short-range radio connection (13) and is not possible via the long-range radio connection (12).

9. The identification document (10) according to claim 8, wherein the data memory is firmly integrated in the identification document, wherein the data memory (11), the key memory (14) and the microprocessor (P) are integrated on one single chip.

10. The identification document (10) according to claim 8, wherein the data memory (11) and the long-range interface (12) are arranged in an extra label attached to a main body of the identification document (10), wherein the label has a further microprocessor (P-2), wherein the data memory (11) is accessible to the further microprocessor (P-2).

11. A terminal (20) for the contactless readout of an electronic identification document (10) according to any of claims 8 to 10, **characterized by**
- a long-range terminal interface via which, via the long-range interface (12) of the identification document (10), a long-range radio connection can be established to the data memory (11) of the identification document (10), and
- a short-range terminal interface, via which, via the short-range interface (13) of the identification document (10), a short-range radio connection can be established to the key memory (14) of the identification document (10).

## Revendications

1. Procédé de lecture sans contact d'un document électronique d'identification (10) au moyen d'un terminal (20),
le document d'identification (10) comprenant :
- un microprocesseur (P),
- une mémoire de données (11) dans laquelle des données d'identification (ID) sont mémorisées sous forme cryptée décryptable avec une clé de données (KD),
- et une mémoire de clé (14) accessible au microprocesseur (P) et dans laquelle la clé de données (KD) est mémorisée,
cependant que, dans le procédé,
- dans une étape de lecture de données, les données d'identification (ID) cryptées sont transmises au terminal (20) depuis la mémoire de données (11),
- dans une étape de lecture de clé, la clé de données (KD) est transmise au terminal (20) depuis la mémoire de clé (14), et
- dans une étape de décryptage, dans le terminal (20), les données d'identification (ID) sont décryptées avec la clé de données (KD),
**caractérisé en ce que**
l'étape de lecture de données est effectuée en utilisant une liaison radio de longue portée et que l'étape de lecture de clé est effectuée en utilisant une liaison radio de courte portée.

2. Procédé selon la revendication 1, cependant que, comme liaison radio de longue portée, une liaison radio d'une portée comprise entre 1 mètre et quelques centaines de mètres et/ou d'une fréquence de fonctionnement comprise entre 0,3 GHz et 10 GHz est prévue.

3. Procédé selon la revendication 1 ou 2, cependant que, comme liaison radio de courte portée, une liaison radio d'une portée comprise entre 1 centimètre et 15 centimètres et/ou d'une fréquence de fonctionnement comprise entre 3 MHz et 20 GHz, de préférence de 13,56 GHz, est prévue.

4. Procédé selon une des revendications de 1 à 3, cependant que
- la mémoire de données (11) est accessible au microprocesseur (P) ou à un autre microprocesseur (P-2), et
- dans l'étape de lecture de données, avant que les données d'identification (ID) ne soient transmises au terminal (20), un premier processus d'authentification est effectué, lors duquel au moins une authentification entre le microprocesseur (P) et le terminal (T) ou entre l'autre microprocesseur (P-2) et le terminal (T) est effectuée, et, au choix, en outre une clé de transport (KT) destinée au cryptage des données d'identification (ID) à transmettre est calculée, et les données d'identification (ID) sont cryptées avec la clé de transport (KT).

5. Procédé selon une des revendications de 1 à 4, cependant que, lors de l'étape de lecture de clé, avant que la clé de données (KD) ne soit transmise au terminal (20), un deuxième processus d'authentification est effectué, lors duquel au moins une authentification entre la puce à microprocesseur (P) et le terminal (20) est effectuée, et, au choix, en outre une clé de transport de clé (KT-KD) destinée au cryptage de la clé données (KD) à transmettre est calculée, et la clé données (KD) est cryptée avec la clé de transport de clé (KT-KD).

6. Procédé selon la revendication 4 ou 5, cependant que, pendant le premier et/ou le deuxième processus d'authentification, une ou plusieurs clés de session (KMAC, KENC) font l'objet d'un accord entre le microprocesseur (P) ou l'autre microprocesseur (P-2) et le terminal (20), et que, à partir d'au moins une clé de session (KENC), la clé de transport (KT) ou la clé de transport de clé (KT-KD) est dérivée.

7. Procédé selon la revendication 6, cependant que, dans le processus d'authentification, une authentification mutuelle ou unilatérale et accord de clé Diffie-Hellman est effectué entre la puce à microprocesseur (P) ou l'autre microprocesseur (P-2) et le terminal (20), en particulier conformément au protocole PACE chapitre. 4.2 ou conformément à Authentification de puce chapitre. 4.3 ou conformément à Authentification de terminal chapitre. 4.4 de BSI TR-03110.

8. Document d'identification (10) ayant
- un microprocesseur (P),
- une mémoire de données (11) dans laquelle des données d'identification (ID) sont mémorisées ou peuvent être mémorisées sous forme cryptée décryptable avec une clé de données (KD),
- et une mémoire de clé (14) accessible au microprocesseur (P) et dans laquelle la clé de données (KD) est mémorisée ou peut être mémorisée,
**caractérisé par**
- une interface de longue portée (12) par l'intermédiaire de laquelle une liaison radio de longue portée entre la mémoire de données (11) et un terminal (20) peut être établie, et
- une interface de courte portée (13) par l'intermédiaire de laquelle une liaison radio de courte portée entre la mémoire de clé (14) et un terminal (20) peut être établie,
**et en ce que**
la clé de données (KD) ou la mémoire de clé (14) sont sécurisées de telle façon qu'un transfert de la clé de données (KD) à un terminal depuis la mémoire de clé (14) est possible par l'intermédiaire de la liaison radio de courte portée (13) et n'est pas possible par l'intermédiaire de la liaison radio de longue portée (12).

9. Document d'identification (10) selon la revendication 8, cependant que la mémoire de données est intégrée à demeure dans le document d'identification (10), cependant que la mémoire de données (11), la mémoire de clé (14) et le microprocesseur (P) sont intégrés sur une seule puce.

10. Document d'identification (10) selon la revendication 8, cependant que la mémoire de données (11) et l'interface de longue portée (12) sont disposées dans une étiquette distincte placée sur un corps principal du document d'identification (10), cependant que l'étiquette comporte un autre microprocesseur (P-2), cependant que la mémoire de données (11) est accessible à l'autre microprocesseur (P-2).

11. Terminal (20) destiné à la lecture sans contact d'un document électronique d'identification (10) selon une des revendications de 8 à 10,
**caractérisé par**
- une interface de terminal de longue portée par le biais de laquelle, par l'intermédiaire de l'interface de longue portée (12) du document d'identification (10), une liaison radio de longue portée à la mémoire de données (11) du document d'identification (10) peut être établie, et
- une interface de terminal de courte portée par le biais de laquelle, par l'intermédiaire de l'interface de courte portée (13) du document d'identification (10), une liaison radio de courte portée à la mémoire de clé (14) du document d'identification (10) peut être établie.
